# EUROPÄISCHE PATENTSCHRIFT

(11) **EP 3 329 236 B1**
(45) Veröffentlichungstag und Bekanntmachung des Hinweises auf die Patenterteilung: **19.10.2022**
(21) Anmeldenummer: 16730853.5
(22) Anmeldetag: 22.06.2016
(51) Int. Cl.: G01L 9/00

(54) **DRUCKSENSOR UND VERFAHREN ZUM ÜBERWACHEN EINES DRUCKSENSORS**
PRESSURE SENSOR AND METHOD FOR MONITORING A PRESSURE SENSOR
CAPTEUR DE PRESSION ET PROCÉDÉ DE SURVEILLANCE D'UN CAPTEUR DE PRESSION

(30) Priorität: 29.07.2015 DE 102015112408
(43) Veröffentlichungstag der Anmeldung: 06.06.2018
(73) Patentinhaber: Endress+Hauser SE+Co. KG, 79689 Maulburg (DE)
(72) Erfinder: JEHLE, Max, 79664 Wehr (DE); PARROTTO, Davide, 79576 Weil am Rhein (DE); UEHLIN, Thomas, 79650 Schopfheim (DE)
(74) Vertreter: Laufer, Michael
(86) Internationale Anmeldenummer: PCT/EP2016/064378
(87) Internationale Veröffentlichungsnummer: WO 2017/016757

(56) Entgegenhaltungen:
- GB-A- 2 039 414
- GB-A- 2 185 106
- US-A- 3 714 829
- US-A- 4 631 401
- US-A- 5 101 664

## Beschreibung

Die Erfindung bezieht sich auf einen Drucksensor zur Bestimmung einer Druckmessgröße sowie ein Verfahren zum Überwachen eines solchen Drucksensors.

Drucksensoren dienen zur Erfassung von Drücken und werden gerne in der industriellen Messtechnik, bspw. zur Füllstandsmessung oder zur Durchflussmessung verwendet. Dabei kommen je nach Einsatzgebiet unterschiedliche Ausprägungen von Drucksensoren zum Einsatz. So kann ein Drucksensor bspw. als Absolutdrucksensor, als Relativdrucksensor oder auch als Differenzdrucksensor ausgebildet sein. Vom Prinzip her sind jedoch alle Drucksensoren gleich aufgebaut und umfassen typischerweise ein Gehäuse in dem ein Drucksensorelement angeordnet ist. In der Druckmesstechnik werden gerne Halbleiter-Drucksensorelemente, bspw. auf Silizium basierende Drucksensorelemente, eingesetzt. Die Halbleiter-Drucksensorelemente weisen dabei eine Messmembran auf, welche in ihrem Randbereich typischerweise vier Widerstandselemente integriert hat. Die Messmembran wird auf ihrer ersten Seite mit einem ersten Druck und auf ihrer zweiten Seite mit einem zweiten Druck beaufschlagt, sodass die beiden Drücke eine Auslenkung der Messmembran hervorrufen. Die druckabhängige Auslenkung der Messmembran wird über die integrierten Widerstandselemente erfasst und ausgewertet, sodass eine Druckmessgröße ausgegeben werden kann. In Abhängigkeit davon, ob es sich um einen Relativdrucksensor, einen Absolutdrucksensor oder einen Differenzdrucksensor handelt, wird die Messmembran mit den entsprechenden beiden Drücken beaufschlagt.

In dem Fall, dass der Drucksensor als Absolutdrucksensor ausgebildet ist, wird eine der beiden Seiten der Messmembran einem Vakuum ausgesetzt und der anderen Seite der Messmembran wird ein zu messender Mediendruck zugeführt. Der Absolutdrucksensor misst somit den Absolutdruck, also den zu messenden Mediendruck im Vergleich zu dem Vakuum als Referenzdruck.

In dem Fall, dass der Drucksensor als Relativdrucksensor ausgebildet ist, wird eine der beiden Seiten der Messmembran einem atmosphärischen Luftdruck als Referenzdruck ausgesetzt und der anderen Seite der Messmembran wird ein zu messender Mediendruck zugeführt. Der Relativdrucksensor misst somit einen Relativdruck, also den zu messenden Mediendruck im Vergleich zu dem atmosphärischen Luftdruck.

In dem Fall, dass der Drucksensor als Differenzdrucksensor ausgebildet ist, wird einer der beiden Seiten der Messmembran ein erster zu messender Mediendruck und der anderen Seite der Messmembran ein zweiter zu messender Mediendruck zugeführt. Der Differenzdrucksensor misst somit einen Differenzdruck, also die Differenz der beiden Mediendrücke.

Im alltäglichen Messbetrieb kommt es immer wieder zu Störungen bis hin zu Ausfällen von solchen Drucksensoren. Daneben weise derartige Drucksensoren das Problem auf, dass sie einem Drift, bspw. durch Ablagerungen oder Alterung, unterliegen, der dazu führt, dass möglicherweise eine verfälschte Druckmessgröße ermittelt wird.

Um ein derartige ungewolltes Verhalten der Drucksensoren zu erkennen ist es notwendig, dass der Sensor während des Messbetriebs überwacht bzw. kontrolliert wird.

Aus dem Stand der Technik sind die US 3 714 829 A, die GB 2 039 414 A, die US 5 101 664 A, die GB 2 185 106 A und die US 4 631 401 A bekannt geworden.

Die US 3 714 829 A offenbart ein Druckmesssystem mit einer Lichtquelle und einer druckempfindlichen Membran, die von der Lichtquelle beleuchtet wird und so ausgebildet ist, dass sie das Licht in Abhängigkeit von dem erfassten Druck reflektiert.

Die GB 2 039 414 A offenbart ein in einem Gehäuse angeordnet Sensorblock, welcher eine Halbleitermembran und einen umlaufenden Träger, der mit der Innenseite des Gehäuses verklebt ist, umfasst.

Die US 5 101 664 A offenbart ein mikrobearbeiteten Silizium-Druckwandler mit einer Schwingbrücke, die aus der gleichen Siliziumplatte wie die druckempfindliche Membran gebildet wird.

Die GB 2 185 106 A offenbart einen optisch angetriebenen Schwingungssensor.

Die US 4 631 401 A offenbart einen eine erste und eine zweite optische Schaltung enthaltenden optischen Verschiebungssensor.

Der Erfindung liegt die Aufgabe zugrunde, einen Lösungsweg aufzuzeigen, auf welchem eine Überwachung bzw. Kontrolle eines Drucksensors ermöglicht wird.

Die Aufgabe wird erfindungsgemäß durch einen Drucksensor sowie ein Verfahren zum Überwachen eines Drucksensors gelöst.

Hinsichtlich des Drucksensors wird die Aufgabe durch einen Drucksensor gemäß Patentanspruch 1 gelöst.

Erfindungsgemäß wird der als Photoleitung bezeichneter Effekt dazu ausgenutzt, eine Diagnose bzw. Überwachung eines Drucksensors zu ermöglichen. Unter Photoleitung wird ein dem inneren photoelektrischer Effekt zugeordneter Effekt verstanden, bei dem die Erhöhung der elektrischen Leitfähigkeit von Halbleitermaterialien aufgrund der Bildung von ungebundenen Elektron-Loch-Paaren bei Bestrahlung erfolgt. Aufgrund der Bestrahlung des Drucksensorelements, welches ein Halbleitermaterial und eine Messmembran mit wenigstens einem integrierten Widerstandselement umfasst, wird der jeweilige messbare elektrische Widerstand des Widerstandselementes und somit auch ein elektrisches Signal, bspw. ein Brückenspannungssignal, verändert. Anhand dieser Änderung kann mit hoher Wahrscheinlichkeit ermittelt werden, ob eine Fehlfunktion des Drucksensors vorliegt. Typische Fehlfunktionen, die so ermittelbar sind bspw. ein Drift der Widerstandselemente und/oder ein Bruch bzw. Riss der Messmembran.

Eine vorteilhafte Ausgestaltung des erfindungsgemäßen Drucksensors sieht vor, dass in dem Fall, dass eine Fehlfunktion vorliegt, der Drucksensor ein Warnsignal ausgibt.

Eine vorteilhafte Ausgestaltung des erfindungsgemäßen Drucksensors sieht vor, dass die optische Anregung mehrere optische Einzelimpulse umfasst.

Eine vorteilhafte Ausgestaltung des erfindungsgemäßen Drucksensors sieht vor, dass die optische Anregung des Drucksensorelementes, insbesondere des integrierten Widerstandselements, nach einer definierten bzw. einer festgelegten Zeitspanne erfolgt.

Eine vorteilhafte Ausgestaltung des erfindungsgemäßen Drucksensors sieht vor, dass die Messmembran weitere integrierte Widerstandselemente aufweist und jeweils ein Leuchtmittel für jedes weitere Widerstandselement vorgesehen ist.

Eine vorteilhafte Ausgestaltung des erfindungsgemäßen Drucksensors sieht vor, dass das Leuchtmittel eine Leuchtdiode ist.

Hinsichtlich des Verfahrens wird die Aufgabe durch ein Verfahren zum Überwachen eines Drucksensors gemäß Patentanspruch 7 gelöst.

Eine vorteilhafte Ausführungsform sieht vor, dass zur Ermittlung, ob aufgrund der erfassten Änderung des elektrischen Signals eine Fehlfunktion des Drucksensors vorliegt, die erfasste Änderung des elektrischen Signals mit einem Erwartungswert verglichen wird und wobei in dem Fall, dass die erfasste Änderung des elektrischen Signals außerhalb eines Toleranzbereiches um den Erwartungswert liegt, die Fehlfunktion des Drucksensors festgestellt wird.

Eine weitere vorteilhafte Ausführungsform sieht vor, dass zur optischen Anregung mehrere optische Einzelimpulse verwendet werden und zur Erfassung der Änderung des elektrischen Signals mehrere elektrische Einzelsignalwerte erfasst werden. Insbesondere sieht die Ausführungsform vor, dass die Änderung des elektrischen Signals durch eine Mittelwertbildung der erfassten mehreren elektrischen Einzelsignalwerte ermittelt wird.

Eine weitere vorteilhafte Ausführungsform sieht vor, dass in dem Fall, dass eine Fehlfunktion des Drucksensors vorliegt, ein Warnsignal ausgegeben wird.

Eine weitere vorteilhafte Ausführungsform sieht vor, dass die optische Anregung in regelmäßigen Abständen während des Messbetriebes durchgeführt wird.

Eine weitere vorteilhafte Ausführungsform sieht vor, dass ein zeitlicher Verlauf der Änderung des elektrischen Signals erfasst wird und anhand des zeitlichen Verlaufs die Fehlfunktion des Drucksensors festgestellt wird.

Eine weitere vorteilhafte Ausführungsform sieht vor, dass das Drucksensorelement mehrere integrierte Widerstandselemente aufweist und eine selektive optische Anregung jedes der integrierten Widerstandselemente durchgeführt wird, und wobei für jedes der integrierten Widerstandselemente eine Änderung eines jeweiligen elektrischen Signals erfasst wird und ermittelt wird, ob aufgrund der jeweils erfassten Änderung des elektrischen Signals eine Fehlfunktion des Drucksensors vorliegt.

Die Erfindung wird anhand der nachfolgenden Zeichnungen näher erläutert. Es zeigt:
Fig. 1: eine schematische Darstellung des erfindungsgemäßen Drucksensors,
Fig. 2: ein schematisches Blockschaltbild des erfindungsgemäßen Drucksensors, und
Fig. 3: eine schematische Darstellung des erfindungsgemäßen Verfahrens,
Fig. 4: eine experimentell ermittelte Messkurve.

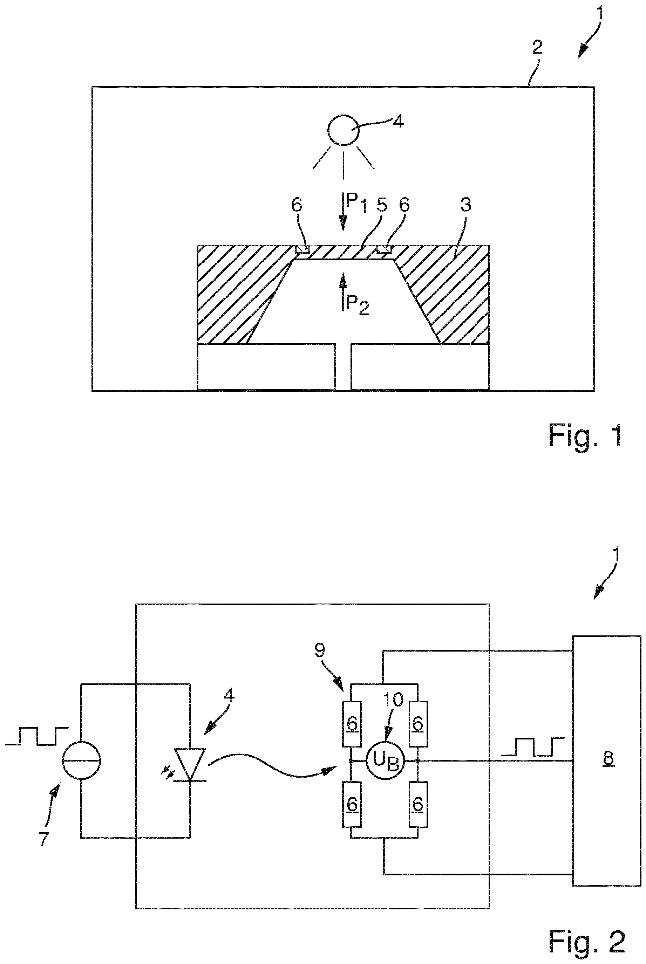

Figur 1 zeigt eine schematische Darstellung des erfindungsgemäßen Drucksensors 1. Dieser umfasst ein Gehäuse 2, ein in dem Gehäuse 2 angeordnetes Drucksensorelement 3 und ein ebenfalls in dem Gehäuse angeordnetes Leuchtmittel 4.

Das in das Gehäuse 2 eingebrachte Drucksensorelement 3 weist ein Halbleitermaterial, vorzugsweise Silizium, auf. In das Drucksensorelement 3 ist eine Messmembran 5, bspw. durch einen Ätzprozess, eingebracht. Zur Bestimmung einer Druckmessgröße wird, bspw. wenn der Drucksensor 1 als Relativdrucksensor ausgebildet ist, der Messmembran 5 an einer ersten Seite ein erster Druck p₁, bspw. ein Atmosphärendruck, und an einer zweiten Seite ein zweiter Druck p₂, bspw. ein zu messender Mediendruck, zugeführt.

Zur Erfassung einer durch Anlegen der Drücke p₁ und p₂ erzeugten druckabhängigen Auslenkung umfasst die Messmembran wiederum vier Widerstandselemente 6, die bspw. durch Dotieren des Halbleitermaterials erzeugt werden. Die auf diese Weise in die Messmembran 5 integrierten Widerstandselemente 6 sind typischerweise im Randbereich der Messmembran 5 angeordnet, um die druckabhängige Auslenkung der Messmembran 5 in Form einer Widerstandsänderung zu erfassen. Basierend auf den Widerstandsänderungen der Widerstandselemente 6 kann der Drucksensor 1 eine Druckmessgröße ermitteln bzw. ausgeben.

Fig. 1 zeigt somit einen Relativdrucksensor. Die Erfindung ist jedoch im gleichen Maße auch auf einen Absolutdruck- oder Differenzdrucksensor übertragbar.

Fig. 2 zeigt ein schematisches Blockschaltbild des erfindungsgemäßen Drucksensors 1, welcher neben dem Leuchtmittel 4 mit entsprechender Leuchtmittelansteuereinheit 7, den Widerstandselementen 6 zusätzlich eine Regel-/Auswerteeinheit 8 umfasst. Die Widerstandselemente 6 sind zu einer Wheatstone-Brücke 9 verschaltet und die Regel-/Auswerteeinheit 8 dient typischerweise zur Erfassung eines die Widerstandswerte repräsentierenden elektrischen Signals 10, bspw. dem Brückenspannungssignal U_{B}. Anhand des erfassten elektrischen Signals 10, in dem dargestellten Fall der Brückenspannung U_{B}, ermittelt die Regel-/Auswerteeinheit 8 eine Druckmessgröße.

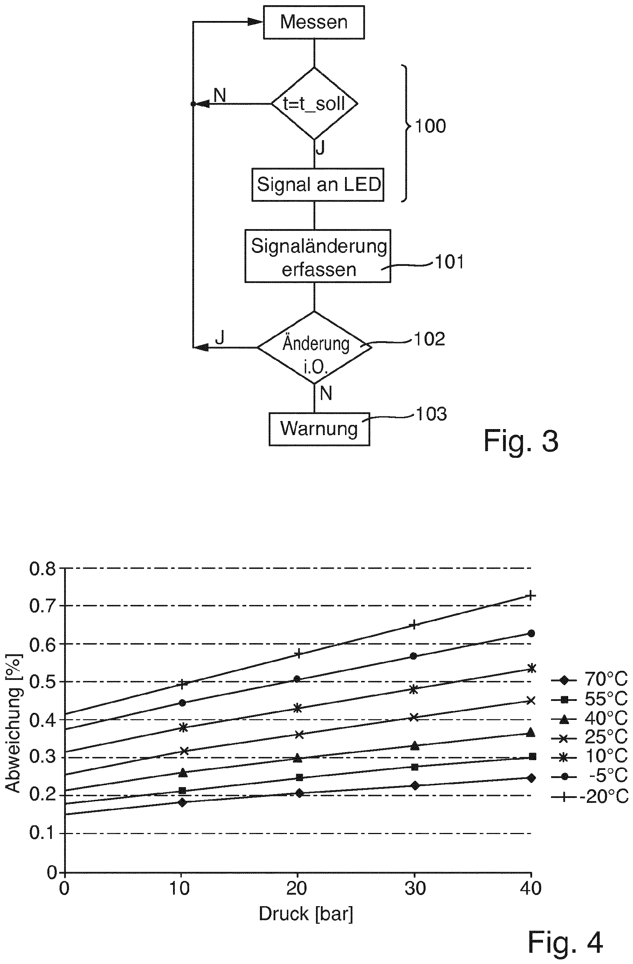

Zusätzlich ist die Regel-/Auswerteeinheit 8 dazu ausgelegt, das in Fig. 3 schematisch dargestellte und nachstehend beschriebene erfindungsgemäße Verfahren gemäß folgender Verfahrensschritte auszuführen:
- Optische Anregung der integrierten Widerstandselemente 100 durch zumindest ein Leuchtmittel, welches bspw. eine Leuchtdiode ist. Die optische Anregung kann dabei durch ein einziges oder selektiv über mehrere Leuchtmittel, vorzugsweise jeweils ein Leuchtmittel für ein Widerstandselement, erfolgen. Von Vorteil hat es sich erwiesen, wenn das Leuchtmittel gepulst wird, d.h. die jeweilige optische Anregung erfolgt durch eine Vielzahl an optischen Einzelimpulsen, welche unmittelbar aufeinander folgen.
- Erfassung einer aufgrund der optischen Anregung hervorgerufenen Änderung des elektrischen Signals 101, wobei in dem Fall, dass jeweils ein Leuchtmittel 4 für ein Widerstandselement 6 und somit eine selektive optische Anregung der Widerstandselemente 6 erfolgt, wird vorzugsweise jeweils ein elektrisches Signal 10 von jedem der Widerstandselemente 6 erfasst. In dem Fall, das die optische Anregung durch mehrere Einzelimpulse erzeugt wird, ist es vorteilhaft die Änderung des elektrischen Signals durch eine Mittelwertbildung der erfassten Einzelsignalwerte zu bestimmen.
- Ermitteln, ob aufgrund der erfassten Änderung des elektrischen Signals 10 bzw. der erfassten Änderungen der jeweiligen elektrischen Signale eine Fehlfunktion des Drucksensors vorliegt 102. Hierfür wird die erfasste Änderung des elektrischen Signals mit einem Erwartungswert verglichen. In dem Fall, dass die erfasste Änderung des elektrischen Signals 10 außerhalb eines vorgegebenen Toleranzbereiches, welcher um den Erwartungswert liegt, eine Fehlfunktion des Drucksensors festgestellt wird. Als Erwartungswerte können bspw. theoretisch ermittelte Werte dienen, die sich durch den photoelektrischen Effekt, insbesondere den zuvor beschriebenen Photoleitungseffekt, herleiten lassen. Alternativ können zuvor experimentell bestimmte Werte als Erwartungswerte dienen.
- Ausgeben eines Warnsignales 103, wenn eine Fehlfunktion des Drucksensors ermittelt wurde.

Fig. 4 zeigt eine experimentell ermittelte Messkurve. Hierbei wurde ein Relativdrucksensor bei unterschiedlichen Drücken (p = 0 - 40 bar) und unterschiedlichen Temperaturen (T = -20°C - 70°C) betrieben. Die optische Anregung erfolgte durch eine Vielzahl von optischen Einzelimpulsen bei den entsprechenden Drücken und Temperaturen. Erfasst wurde die Änderung bzw. Abweichung des elektrischen Signals über eine Mittelwertbildung der erfassten mehreren Einzelsignalwerte, wobei die Änderung bzw. Abweichung die Differenz des elektrischen Signals mit optischer Anregung und dem elektrischen Signal ohne optische Anregung ist.

Wie aus Fig. 4 ersichtlich, zeigt das erfasste elektrische Signal 10 eine Änderung, welche auf die optische Anregung zurückzuführen ist. Ebenfalls ersichtlich aus Fig. 4 ist, dass eine Temperatur- und Druckabhängigkeit des elektrischen Signals 10 vorliegt, welche ggf. noch kompensiert werden muss, bevor eine Fehlfunktion des Drucksensors 1 ermittelbar ist. Liegt nun trotz einer möglichen Temperatur- und Druckkompensation eine über den Toleranzbereich hinausgehende Änderung des elektrischen Signals vor, kann mit hoher Wahrscheinlichkeit davon ausgegangen werden, dass eine Fehlfunktion, bspw. ein Drift der Widerstandselemente 6 und/oder ein Membranbruch bzw. Membranriss vorliegt.

### Bezugszeichenliste

- 1: Drucksensor
- 2: Gehäuse
- 3: Drucksensorelement
- 4: Leuchtmittel
- 5: Messmembran
- 6: Widerstandselement
- 7: Leuchtmittelansteuereinheit
- 8: Regel-/Auswerteeinheit
- 9: Wheatstone-Brücke
- 10: Elektrisches Signal
- p₁: Erster Druck
- p₂: Zweiter Druck
- U_{B}: Brückenspannung

## Patentansprüche

1. Drucksensor (1) zum Bestimmen einer Druckmessgröße, umfassend zumindest ein Gehäuse (2), ein in dem Gehäuse (2) angeordnetes Drucksensorelement (3), ein ebenfalls in dem Gehäuse (2) angeordnetes Leuchtmittel (4), sowie eine Regel-/Auswerteeinheit (8), wobei das Drucksensorelement (3) ein Halbleitermaterial und eine Messmembran aufweist, wobei an einer ersten Seite der Messmembran (5) ein erster Druck (p₁) und an einer zweiten Seite der Messmembran (5) ein zweiter Druck (p₂) angelegt ist, sodass die Messmembran (5) eine druckabhängige Auslenkung erfährt, wobei die Messmembran (5) zumindest ein integriertes Widerstandselement (6) aufweist und die Regel-/Auswerteeinheit (8) mit Hilfe des integrierten Widerstandselements (6) ein elektrisches Signal (10) zur Druckmessgrößen Bestimmung ermittelt, wobei das Leuchtmittel (4) dazu eingerichtet ist, das zumindest eine integrierte Widerstandselement (6) optisch zu einer Photoleitung anzuregen und **dadurch gekennzeichnet, dass**
die Regel-/Auswerteeinheit (8) dazu eingerichtet ist, anhand einer aufgrund der optischen Anregung hervorgerufenen Änderung des elektrischen Signals (10) zu ermitteln, ob aufgrund der erfassten Änderung des elektrischen Signals eine Fehlfunktion des Drucksensors vorliegt (102), und die erfasste Änderung des elektrischen Signals (10) mit einem erwarteten Wert zu vergleichen und ferner in dem Fall, dass die erfasste Änderung des elektrischen Signals (10) außerhalb eines Toleranzbereiches um den erwarteten Wert liegt, die Fehlfunktion des Drucksensors (1) festzustellen, wobei die Fehlfunktion ein Drift des zumindest einen Widerstandselements und/oder ein Bruch bzw. ein Riss der Messmembran umfasst.

2. Drucksensor nach Anspruch 1, wobei in dem Fall, dass eine Fehlfunktion vorliegt, der Drucksensor (1) ein Warnsignal ausgibt.

3. Drucksensor nach Anspruch 1 oder 2, wobei die optische Anregung mehrere optische Einzelimpulse umfasst.

4. Drucksensor nach einem oder mehreren der vorherigen Ansprüche, wobei die optische Anregung des Drucksensorelementes (3), insbesondere des integrierten Widerstandselements (6), nach einer definierten bzw. festgelegten Zeitspanne erfolgt.

5. Drucksensor nach einem oder mehreren der vorherigen Ansprüche, wobei die Messmembran (5) weitere integrierte Widerstandselemente (6) aufweist und jeweils ein Leuchtmittel (4) für jedes weitere Widerstandselement (6) vorgesehen ist.

6. Drucksensor nach einem oder mehreren der vorhergehenden Ansprüche, wobei das Leuchtmittel (4) eine Leuchtdiode ist.

7. Verfahren zum Überwachen eines Drucksensors (1), insbesondere nach einem der vorhergehenden Ansprüche, wobei der Drucksensor (1) ein Drucksensorelement (3) umfasst, welches ein Halbleitermaterial und eine Messmembran (5) mit wenigstens einem integrierten Widerstandselement (6) aufweist, wobei das Verfahren die folgenden Schritte umfasst:
- Optische Anregung des zumindest einen integrierten Widerstandselementes (100) zur Photoleitung;
- Erfassen einer aufgrund der optischen Anregung hervorgerufenen Änderung eines elektrischen Signals (101);
- **dadurch gekennzeichnet, dass** das Verfahren ferner den folgenden Schritt umfasst:
Ermitteln, ob aufgrund der erfassten Änderung des elektrischen Signals eine Fehlfunktion des Drucksensors vorliegt (102), wobei zur Ermittlung, ob aufgrund der erfassten Änderung des elektrischen Signals eine Fehlfunktion des Drucksensors vorliegt (102), die erfasste Änderung des elektrischen Signals (10) mit einem erwarteten Wert verglichen wird und wobei in dem Fall, dass die erfasste Änderung des elektrischen Signals (10) außerhalb eines Toleranzbereiches um den erwarteten Wert liegt, die Fehlfunktion des Drucksensors (1) festgestellt wird, wobei als Fehlfunktion ein Drift des wenigstens einen Widerstandselements und/oder ein Bruch bzw. ein Riss der Messmembran festgestellt wird.

8. Verfahren nach Anspruch 7, wobei zur optischen Anregung (100) mehrere optische Einzelimpulse verwendet werden und zur Erfassung der Änderung des elektrischen Signals mehrere elektrische Einzelsignalwerte erfasst werden.

9. Verfahren nach Anspruch 8, wobei die Änderung des elektrischen Signals (10) durch eine Mittelwertbildung der erfassten mehreren elektrischen Einzelsignalwerte ermittelt wird.

10. Verfahren nach einem der Ansprüche 7 bis 9, wobei in dem Fall, dass eine Fehlfunktion des Drucksensors (1) vorliegt, ein Warnsignal ausgegeben wird.

11. Verfahren nach einem der Ansprüche 7 bis 10, wobei die optische Anregung (100) in regelmäßigen Abständen während des Messbetriebes durchgeführt wird.

12. Verfahren nach Anspruch 11, wobei ein zeitlicher Verlauf der Änderung des elektrischen Signals erfasst wird und anhand des zeitlichen Verlaufs die Fehlfunktion des Drucksensors festgestellt wird.

13. Verfahren nach einem der Ansprüche 7 bis 12, wobei das Drucksensorelement mehrere integrierte Widerstandselemente aufweist und eine selektive optische Anregung jedes der integrierten Widerstandselemente durchgeführt wird, und wobei für jedes der integrierten Widerstandselemente eine Änderung eines elektrischen Signals (101) erfasst wird und ermittelt wird, ob aufgrund der jeweils erfassten Änderung des elektrischen Signals eine Fehlfunktion des Drucksensors vorliegt (102).

## Claims

1. Pressure sensor (1) for determining a pressure measured variable, comprising at least a housing (2), a pressure sensor element (3) arranged in the housing (2), a lighting means (4) also arranged in the housing (2), and a control/evaluation unit (8), wherein the pressure sensor element (3) features a semi-conductor material and a measuring membrane, wherein a first pressure (p₁) is applied on a first side of the measuring membrane (5) and a second pressure (p₂) is applied on a second side of the measuring membrane (5) such that the measuring membrane (5) experiences a pressure-dependent deflection, wherein the measuring membrane (5) has at least an integrated resistance element (6) and wherein - with the aid of the integrated resistance element (6) - the control/evaluation unit (8) determines an electrical signal (10) for determining the pressure measured variable, wherein the lighting means (4) is designed to optically excite the at least one integrated resistance element (6) to photoconductivity and
**characterized in that**
on the basis of a change in the electrical signal (10) caused by the optical excitation, the control/evaluation unit (8) is designed to determine whether a pressure sensor malfunction is present (102) on the basis of the recorded change in the electrical signal, and to compare the recorded change in the electrical signal (10) with an expected value and, furthermore, in the event that the recorded change in the electrical signal (10) is outside a tolerance range around the expected value, to determine the malfunction of the pressure sensor (1), wherein the malfunction comprises a drift of the at least one resistance element and/or comprises a rupture or a crack in the measuring membrane.

2. Pressure sensor as claimed in Claim 1, wherein, in the event of a malfunction, the pressure sensor (1) emits a warning signal.

3. Pressure sensor as claimed in Claim 1 or 2, wherein the optical excitation comprises multiple optical individual pulses.

4. Pressure sensor as claimed in one of the previous claims, wherein the optical excitation of the pressure sensor element (3), particularly of the integrated resistance element (6), takes place after a defined or specified time span.

5. Pressure sensor as claimed in one or more of the previous claims, wherein the measuring membrane (5) has additional integrated resistance elements (6) and wherein a lighting means (4) is provided for each additional resistance element (6).

6. Pressure sensor as claimed in one or more of the previous claims, wherein the lighting means (4) is a light-emitting diode.

7. Procedure for monitoring a pressure sensor (1), particularly as claimed in one of the previous claims, wherein said pressure sensor (1) comprises a pressure sensor element (3) featuring a semi-conductor material and a measuring membrane (5) with at least an integrated resistance element (6), wherein said procedure comprises the following steps:
- Optical excitation of the at least one integrated resistance element (100) for the photoconductivity;
- Detection of a change in an electrical signal (101) caused by optical excitation;
- **characterized in that** the procedure further comprises the following step:
Determination of whether a malfunction of the pressure sensor (102) has occurred on the basis of the recorded change in the electrical signal, wherein, in order to determine whether a malfunction of the pressure sensor (102) on the basis of the recorded change in the electrical signal the recorded change in the electrical signal (10) is compared with an expected value and in the event that the recorded change in the electrical signal (10) is outside a tolerance range around the expected value, the malfunction of the pressure sensor (1) is determined, wherein a drift of the at least one resistance element and/or a rupture or a crack in the measuring membrane is considered a malfunction.

8. Procedure as claimed in Claim 7, wherein multiple optical individual pulses are used for the optical excitation (100) and multiple individual electrical signal values are recorded to record the change in the electrical signal.

9. Procedure as claimed in Claim 8, wherein the change in the electrical signal (10) is determined by calculating the mean value of the multiple individual electrical signal values recorded.

10. Procedure as claimed in one of the Claims 7 to 9, wherein a warning signal is output in the event of a malfunction of the pressure sensor (1).

11. Procedure as claimed in one of the Claims 7 to 10, wherein optical excitation (100) is performed at regular intervals during measuring operation.

12. Procedure as claimed in Claim 11, wherein the development over time of the change in the electrical signal is recorded and the malfunction of the pressure sensor is determined on the basis of the development of the change in the electrical signal overtime.

13. Procedure as claimed in one of the Claims 7 to 12, wherein the pressure sensor element has multiple integrated resistance elements and a selective optical excitation of each of the integrated resistance elements is performed, and wherein a change in an electrical signal (101) is recorded for each of the integrated resistance elements and it is determined whether a malfunction of the pressure sensor (102) has occurred on the basis of the recorded change in the electrical signal.

## Revendications

1. Capteur de pression (1) destiné à la détermination d'une grandeur de mesure de pression, lequel capteur comprend au moins un boîtier (2), un élément capteur de pression (3) disposé dans le boîtier (2), un moyen lumineux (4) également disposé dans le boîtier (2), ainsi qu'une unité de régulation/d'exploitation (8), l'élément capteur de pression (3) présentant un matériau semi-conducteur et une membrane de mesure, une première pression (p₁) étant appliquée sur un premier côté de la membrane de mesure (5) et une deuxième pression (p₂) étant appliquée sur un deuxième côté de la membrane de mesure (5), de sorte que la membrane de mesure (5) subit une déviation en fonction de la pression, la membrane de mesure (5) présentant au moins un élément résistif intégré (6) et l'unité de régulation/d'exploitation (8) déterminant, à l'aide de l'élément résistif intégré (6), un signal électrique (10) pour la détermination de la grandeur de mesure de pression, le moyen lumineux (4) étant conçu pour exciter optiquement l'au moins un élément résistif intégré (6) en une photoconduction et
**caractérisé en ce que**
l'unité de régulation/d'exploitation (8) est conçue pour déterminer, à l'aide d'une modification du signal électrique (10) provoquée en raison de l'excitation optique, si un dysfonctionnement du capteur de pression est présent (102) en raison de la modification détectée du signal électrique, et à comparer la variation détectée du signal électrique (10) avec une valeur attendue et, en outre, dans le cas où la variation détectée du signal électrique (10) se situe en dehors d'une plage de tolérance autour de la valeur attendue, à constater le dysfonctionnement du capteur de pression (1), le dysfonctionnement étant une dérive de l'au moins un élément résistif et/ou une rupture ou un défaut de la membrane de mesure.

2. Capteur de pression selon la revendication 1, pour lequel, dans le cas d'un dysfonctionnement, le capteur de pression (1) émet un signal d'avertissement.

3. Capteur de pression selon la revendication 1 ou 2, pour lequel l'excitation optique comprend plusieurs impulsions optiques individuelles.

4. Capteur de pression selon l'une des revendications précédentes, pour lequel l'excitation optique de l'élément capteur de pression (3), notamment de l'élément résistif intégré (6), a lieu après un laps de temps défini ou déterminé.

5. Capteur de pression selon l'une des revendications précédentes, pour lequel la membrane de mesure (5) présente d'autres éléments résistifs intégrés (6) et un moyen lumineux (4) étant prévu pour chaque autre élément résistif (6).

6. Capteur de pression selon l'une des revendications précédentes, pour lequel le moyen lumineux (4) est une diode électroluminescente.

7. Procédé destiné à la surveillance d'un capteur de pression (1), notamment selon l'une des revendications précédentes, ledit capteur de pression (1) comprenant un élément capteur de pression (3) comportant un matériau semi-conducteur et une membrane de mesure (5) avec au moins un élément résistif intégré (6), ledit procédé comprenant les étapes suivantes :
- Excitation optique d'au moins un élément résistif intégré (100) pour la photoconduction ;
- Détection d'une modification d'un signal électrique (101) provoquée par l'excitation optique ;
- **caractérisé en ce que** le procédé comprend en outre l'étape suivante, consistant à :
Déterminer si, en raison de la modification détectée du signal électrique, il y a présence d'un dysfonctionnement du capteur de pression (102) et, pour déterminer s'il y a un dysfonctionnement du capteur de pression (102) en raison de la variation détectée du signal électrique, on compare la variation détectée du signal électrique (10) à une valeur attendue et, dans le cas où la variation détectée du signal électrique (10) se situe en dehors d'une plage de tolérance autour de la valeur attendue, le dysfonctionnement du capteur de pression (1) est constaté, une dérive de l'au moins un élément résistif et/ou une rupture ou une fissure de la membrane de mesure étant constatée en tant que dysfonctionnement.

8. Procédé selon la revendication 7, pour lequel plusieurs impulsions optiques individuelles sont utilisées pour l'excitation optique (100) et plusieurs valeurs de signal électrique individuelles sont saisies pour la saisie de la modification du signal électrique.

9. Procédé selon la revendication 8, pour lequel la modification du signal électrique (10) est déterminée par un calcul de la valeur moyenne des plusieurs valeurs de signal électrique individuelles saisies.

10. Procédé selon l'une des revendications 7 à 9, pour lequel un signal d'avertissement est émis en cas de dysfonctionnement du capteur de pression (1).

11. Procédé selon l'une des revendications 7 à 10, pour lequel l'excitation optique (100) est réalisée à intervalles réguliers pendant le fonctionnement de la mesure.

12. Procédé selon la revendication 11, pour lequel un déroulement temporel de la modification du signal électrique est enregistré et le dysfonctionnement du capteur de pression est constaté à l'aide du déroulement temporel.

13. Procédé selon l'une des revendications 7 à 12, pour lequel l'élément capteur de pression comporte plusieurs éléments résistifs intégrés et une excitation optique sélective de chacun des éléments résistifs intégrés est effectuée, et
pour lequel, pour chacun des éléments résistifs intégrés, une modification d'un signal électrique (101) est détectée et on détermine si, en raison de la modification du signal électrique respectivement détectée, il existe un dysfonctionnement du capteur de pression (102).
